# EUROPÄISCHE PATENTANMELDUNG

(11) **EP 3 852 176 A1**
(43) Veröffentlichungstag der Anmeldung: **21.07.2021**
(21) Anmeldenummer: 21150172.1
(22) Anmeldetag: 05.01.2021
(51) Int. Cl.: H01M 8/04089, H01M 8/04225, H01M 8/04082, H01M 8/04029

(54) **BRENNSTOFFZELLENSYSTEM**

(30) Priorität: 20.01.2020 DE 102020200611
(71) Anmelder: Deutsches Zentrum für Luft- und Raumfahrt e.V., 51147 Köln (DE)
(72) Erfinder: Becker, Florian, 21129 Hamburg (DE); Montaner Rios, Gema, 21129 Hamburg (DE); Bleeck, Stefan, 21129 Hamburg (DE)
(74) Vertreter: Knoop, Philipp

(57) **Zusammenfassung**

Die vorliegende Erfindung betrifft ein Brennstoffzellensystem (1) aufweisend eine Brennstoffzelle (2) mit einer Anode (3) und einer Kathode (4), Verdichtermittel (7) zum Verdichten eines Arbeitsmediums (19), wobei die Verdichtermittel (7) zur Umformung kinetischer Energie eines Hochdruckgases (21) in eine Verdichtung des Arbeitsmediums (19) ausgestaltet sind, wobei die Verdichtermittel (7) eine Druckgaskammer zur Versorgung der Brennstoffzelle (1) mit Hochdruckgas (21) und eine Verdichterkammer zum Verdichten des Arbeitsmediums (19) und einen in der Druckgaskammer und der Verdichterkammer geführten Kolben (12) aufweisen, wobei ein hochdruckseitiges Ende des Kolbens (12) in der Druckgaskammer und ein verdichterseitiges Ende des Kolbens (12) in der Verdichterkammer geführt ist.

## Beschreibung

Die vorliegende Erfindung betrifft ein Brennstoffzellensystem für den Einsatz insbesondere im Transportsektor.

Die Betriebsstabilität und Ausfallsicherheit von Brennstoffzellen sind insbesondere im Transportsektor von großer Bedeutung. Erhöhte Anforderungen an das System treten insbesondere beim Starten oder bei Leistungsspitzten, wie bei der Beschleunigung, auf. Um den Start einer Brennstoffzelle zu ermöglichen, müssen die zum Betrieb bekannter Brennstoffzellen notwendigen Hilfsinstrumente wie ein Verdichter, der zum Verdichten der an der Kathode zugeführten Luft der Brennstoffzelle notwendig ist, oder eine Kühlmittelpumpe bereits mit Energie versorgt werden. Im laufenden Betrieb der Brennstoffzelle ist dies weitestgehend über die von der Brennstoffzelle selbst erzeugte elektrische Energie möglich, diese Energie steht jedoch beim Start der Brennstoffzelle noch nicht zur Verfügung bzw. kann bei Leistungsspitzen möglicherweise kurzfristig nicht ausreichen. Daher wird typischerweise Hilfsenergie extern zugeführt, insbesondere über Batterien.

Aus der DE 10 2007 007 934 A1 ist ein Brennstoffzellensystem mit einem Druckluftspeicher bekannt, wobei der Druckluftspeicher zur Bereitstellung verdichteter Luft für die Kathode dient. Die Luft wird dabei über einen Kompressor verdichtet, der über ein Fahrzeugrad angetrieben wird. Nachteilig an dieser Lösung ist, dass die Bewegungsenergie, mit welcher der Drucklufttank beim Befüllen des Drucklufttanks angetrieben werden muss, nicht mehr für den Vortrieb des Fahrzeuges zur Verfügung steht

Neben der Verdichtung von Luft ist zum Betrieb einer PEM-Brennstoffzelle auch eine Druckminderung des Brenngases Wasserstoff, der typischerweise in Druckbehältern mit bis zu 750 bar gespeichert ist, auf einen Betriebsdruck von ca. 1-3 bar notwendig. Aus der DE 10 2011 109 892 A1 ist es bekannt diese Energie zumindest teilweise zur Verbesserung des Wirkungsgrades eines Brennstoffzellensystems zu nutzen. Dazu ist Hochdruckwasserstoff in einem Gastank mit zwei einstellbaren Druckniveaus gelagert, welche jeweils über Ventile an eine Leitung angeschlossen sind, die zu einer Turbine führt. Ein Öffnen eines der Ventile führt zu einem Gasfluss, der die Turbine antreibt, die wiederum einen Luftförderer antreibt. Eine teilweise Rückführung des am Ventil ausgelassenen Wasserstoffes in den Tank ist zum Betrieb des Systems ebenso notwendig wie Drucksensoren und Druckregelventile an Ein- und Auslässen der Kammern des Tanks. Nachteilig an dieser Lösung sind die aufwendige Konstruktion des Wasserstofftanks und der angeschlossenen Leitungen und Ventile sowie die geringe Effizienz der auf dem Turboladerprinzip arbeitenden Turbine, insbesondere bei geringen Massenströmen.

Es ist daher Aufgabe der Erfindung ein betriebssicheres Brennstoffzellensystem vorzuschlagen, dass ohne äußere Energiezufuhr in allen Betriebszuständen effizient arbeitet.

Bei einem Brennstoffzellensystem, aufweisend eine Brennstoffzelle mit einer Anode und einer Kathode, Verdichtermittel zum Verdichten eines Arbeitsmediums, wobei die Verdichtermittel zur Umformung kinetischer Energie eines Hochdruckgases in eine Verdichtung des Arbeitsmediums ausgestaltet sind, wird diese Aufgabe dadurch gelöst, dass die Verdichtermittel eine Druckgaskammer zur Versorgung der Brennstoffzelle mit Hochdruckgas und eine Verdichterkammer zum Verdichten des Arbeitsmediums und einen in der Druckgaskammer und der Verdichterkammer geführten Kolben aufweisen, wobei ein hochdruckseitiges Ende des Kolbens in der Druckgaskammer und ein verdichterseitiges Ende des Kolbens in der Verdichterkammer geführt ist.

Auf diese Weise wird die notwendige Druckreduktion des gespeicherten Hochdruckgases effizient in eine Verdichtung des Arbeitsmediums umgesetzt. Eine aufwendige Speicherung und Rückführung des Hochdruckgases ist nicht notwendig. Die Kolbenbewegung im Verdichtermittel ist kaum störanfällig und bietet eine effiziente Energieübertragung zwischen Hochdruckgas und Arbeitsmedium in den beiden Kammern.

Sobald die Brennstoffzelle anläuft, wird in ihr Hochdruckgas verbraucht, dieser Verbrauch führt zu einer Druckdifferenz in der durch das hochdruckseitige Ende des Kolbens geteilten Druckgaskammer. Diese Differenz führt zu einer Bewegung des Kolbens bis zum Druckausgleich zwischen beiden Teilen der Druckgaskammer. Bei Vorliegen eines Druckausgleichs ist das hochdruckseitige Ende des Kolbens ein Ventil öffnend, wodurch Hochdruckgas in einen Teil der durch das hochdruckseitige Ende des Kolbens getrennten Druckgaskammer fließt. Durch diesen Gasfluss entsteht wiederum eine Druckdifferenz zwischen beiden Teilen der Druckgaskammer, welche mit umgekehrtem Vorzeichen zur ursprünglichen Druckdifferenz vorliegt. Durch die daraus folgende Rückbewegung des Kolbens wird das von diesem gerade geöffnete Ventil geschlossen. Bei Herstellung von Druckausgleich zwischen beiden Teilen der Druckgaskammer wird ein weiteres Ventil im anderen Teil der durch das hochdruckseitige Ende des Kolbens getrennten Druckgaskammer geöffnet, wodurch Hochdruckgas in diesen Teil der Druckgaskammer fließt. Die Bewegung des hochdruckseitigen Endes des Kolbens führt gleichzeitig zu einer Bewegung des verdichterseitigen Endes des Kolbens. Diese Bewegung verdichtet das in der Verdichterkammer enthaltene Arbeitsmedium bzw. fördert das Arbeitsmedium aus der Verdichterkammer.

In Ausgestaltung der Erfindung ist es vorgesehen, dass das Arbeitsmedium ein Kathodengas, insbesondere Umgebungsluft, ist und/oder dass das Hochdruckgas Anodengas, insbesondere Wasserstoff, ist.

Damit ist es ermöglicht, dass die für den Betrieb der Brennstoffzelle notwendige Verdichtung der Umgebungsluft mit Hilfe der kinetischen Energie des ebenfalls von der Brennstoffzelle zum Betrieb benötigten Wasserstoffs erfolgt. Ein Starten und ein Betrieb der Brennstoffzelle ohne zusätzlichen Verdichter und den Bedarf externer Energiequellen sind damit ermöglicht.

Weiterhin ist es vorgesehen, dass die Druckgaskammer an eine Anodenleitung, in der das Hochdruckgas in die Anode geführt ist, angeschlossen ist und die Verdichterkammer an eine Kathodenleitung, in der die verdichtete Umgebungsluft in die Kathode geführt ist, angeschlossen ist.

Dies ermöglicht eine direkte Verbindung zwischen Verdichtermittel und Brennstoffzelle und damit eine entsprechende Versorgung der Brennstoffzelle mit dem benötigten Brenngas und verdichteter Umgebungsluft.

In Weiterbildung der Erfindung ist es vorgesehen, dass die Verdichtermittel als eine Boosterpumpe ausgestaltet sind.

Boosterpumpen sind gängige Pumpen zur Erhöhung des Drucks eines Arbeitsmediums. Sie sind Standardbauteile, in denen Kreisläufe des Arbeitsmediums und des Hochdruckgases getrennt vorliegen und die ohne Öl, lediglich durch ein gasförmiges Medium wie zum Beispiel Druckluft betrieben werden, was sie weniger störanfällig im Vergleich zu anderen Pumpen macht, womit die Betriebssicherheit des Brennstoffzellensystems verbessert ist.

Weiterhin ist vorgesehen, dass ein Radius eines verdichterseitigen Endes des Kolbens kleiner als ein weiterer Radius des hochdruckseitigen Endes des Kolbens ist.

Die Verdichtung bzw. Fördermenge des Arbeitsmediums hängen von Aufbau und Geometrie der Verdichter- und Druckgaskammer sowie des Kolbens ab. Ein kleinerer Radius des verdichterseitigen Endes des Kolbens führt zu einem höheren Druck des verdichteten Arbeitsmediums. Eine damit ermöglichte Versorgung der Brennstoffzelle mit stärker verdichteter Luft bedeutet dabei eine vorteilhafte Steigerung ihres Wirkungsgrades.

In Ausgestaltung der Erfindung ist es vorgesehen, dass die Anodenleitung einen Druckminderer aufweist.

Auf diese Weise ist der Druck des aus einem Ausgang der Druckgaskammer austretenden Hochdruckgas weiter reduzierbar. Die in den Verdichtermitteln erreichte Druckminderung ist im Allgemeinen nicht ausreichend, um das Hochdruckgas auf Betriebsdruck der Brennstoffzelle zu bringen. Dabei sind ein Betriebsdruck des Anodengases p3 und ein Betriebsdruck des Kathodengases p6 vorteilhafterweise in etwa gleich groß.

In Weiterbildung der Erfindung ist es vorgesehen, dass die Kathodenleitung Sperrmittel zum Blockieren eines Gasflusses der Umgebungsluft in der Kathodenleitung aufweist.

Die Sperrmittel ermöglichen ein Stoppen der Zufuhr von Kathodengas in die Kathode und somit ein Stoppen des Betriebs der Brennstoffzelle und damit des Verdichtermittels bzw. ein vereinfachtes Starten der Brennstoffzelle und des Betriebs des Verdichtermittels durch Öffnen der Sperrmittel. Gleichzeitig ermöglichen die Sperrmittel eine generelle Regulierung eines Kathodengasflusses zur Kathode.

Weiterhin ist es vorgesehen, dass die Kathodenleitung einen Drucktank zur Zwischenspeicherung der in den Verdichtermitteln verdichteten Umgebungsluft aufweist.

Im Drucktank ist durch die Verdichtermittel verdichtete Umgebungsluft speicherbar. Insbesondere zum Starten der Brennstoffzelle stellt dieser damit bereits verdichtete Umgebungsluft zur Verfügung, ohne dass die Verdichtermittel bereits in Betrieb sein müssen. Weiterhin ist eine vereinfachte Erhöhung des Umgebungsgasflusses zur Kathode ermöglicht.

In Ausgestaltung der Erfindung ist es vorgesehen, dass das Arbeitsmedium ein Kühlmittel und/oder Wasser ist.

Auf diese Weise ist die kinetische Energie des Hochdruckgases zur Förderung bzw. Verdichtung von Kühlmittel und/oder Wasser nutzbar, wodurch eine externe Versorgung einer zum Betrieb der Brennstoffzelle notwendigen Kühlmittelpumpe des Brennstoffzellenstapels mit großem Vorteil entfällt. Durch die Förderung von Wasser, insbesondere Produktwasser der Brennstoffzelle, ist das Kathodengas ohne weiteren Energieaufwand befeuchtbar bzw. ist die Feuchteverteilung des Brennstoffzellenstapels regulierbar.

Weiterhin ist es vorgesehen, dass es mindestens ein weiteres Verdichtermittel zum Verdichten von nicht aus der Verdichterkammer stammender Umgebungsluft zur Versorgung der Kathode aufweist, wobei das weitere Verdichtermittel über die Brennstoffzelle mit elektrischer Energie versorgbar ist und wobei zwischen weiterem Verdichtermittel und Kathode ein Rückschlagventil angeordnet ist.

Damit ist die Brennstoffzelle im Betrieb durch die weiteren Verdichtermittel mit verdichteter Umgebungsluft versorgbar. Dies ermöglicht in Kombination mit dem verdichteten Umgebungsgasfluss aus den Verdichtermitteln deutlich höhere Volumenströme und Drücke des an der Kathode zugeführten Umgebungsgases, was gleichbedeutend ist mit einer Erhöhung des Wirkungsgrades der Brennstoffzelle.

Außerdem ist es noch vorgesehen, dass das Brennstoffzellensystem einen Gastank zur Lagerung des Hochdruckgases aufweist.

Damit lässt sich das Brennstoffzellensystem auf einfache Weise mit Hochdruckgas versorgen. Ein speziell ausgelegter, mehrere Kammern aufweisender Gastank ist mit großem Vorteil nicht notwendig.

Die Erfindung wird nachfolgend unter Bezugnahme auf eine Abbildung näher beschrieben. Weitere vorteilhafte Einzelheiten sind dabei den Figuren der Abbildung zu entnehmen. Dabei zeigen:
Fig. 1: eine schematische Darstellung eines erfindungsgemäßen Brennstoffzellensystems;
Fig. 2: eine weitere Ausführungsform des erfindungsgemäßen Brennstoffzellensystems.

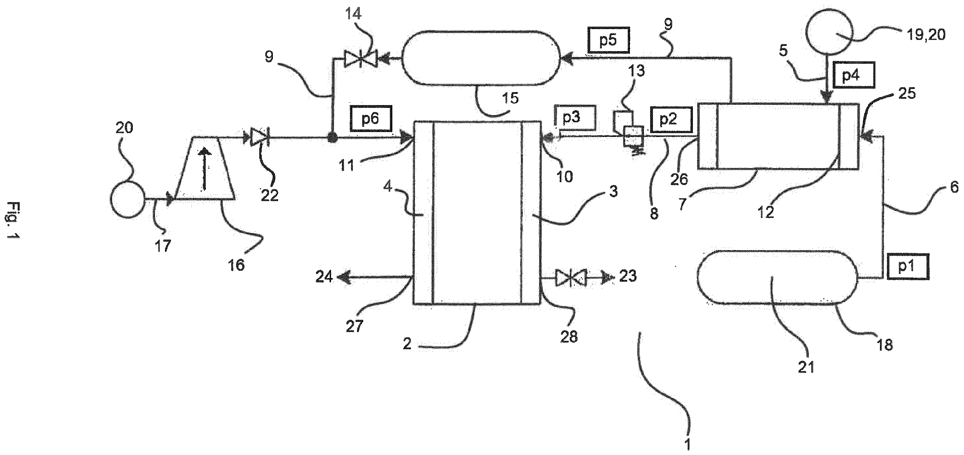

Fig. 1 zeigt eine schematische Darstellung einer Ausführungsform eines erfindungsgemäßen Brennstoffzellensystems 1. Dabei weist das Brennstoffzellensystem 1 eine Brennstoffzelle 2 mit einer Kathode 4 und einer Anode 3 auf. Zum Betrieb der Brennstoffzelle 2 wird über eine Kathodenleitung 9 Umgebungsluft 20 mit einem Druck p6 In die Kathode 4 eingespeist und über eine Anodenleitung 8 wird Hochdruckgas 21 in Form von Wasserstoff mit einem Druck p3 in die Anode 5 eingespeist. Vorteilhafterweise entspricht dabei der Druck der eingespeisten Umgebungsluft p6 dem Druck des eingespeisten Hochdruckgases p3. Das Hochdruckgas 21 ist mit einem deutlich oberhalb des späteren Einspeisedrucks p6 liegenden Vorratsdruck p1 in einem Gastank 18 gespeichert. Der Gastank 18 ist mit einem Eingang 25 von ersten Verdichtermitteln 7, die in der dargestellten Ausführungsform als Gas Booster ausgebildet sind, durch zweite Einleitungsmittel 6 leitend verbunden. Insbesondere ist der Gastank dabei mit einer Druckgaskammer der Verdichtermittel 7 leitend verbunden, wobei an gegenüberliegenden Enden der Druckgaskammer jeweils Rückschlagventile angeordnet sind, die einen Zufluss von Hochdruckgas 21 in einen jeweils mit dem geöffneten Rückschlagventil verbundenen Teil der Druckgaskammer ermöglichen. Über erste Einleitungsmittel 5, die leitend mit einer Verdichterkammer der ersten Verdichtermitteln 7 verbunden sind, ist ein Arbeitsmedium 19, welches in der dargestellten Ausführungsform Umgebungsluft 20 ist, mit einem Druck p4 in die ersten Verdichtermittel 7 einleitbar. Ein Ausgang 26 der ersten Verdichtermittel 7 ist leitend mit der Anodenleitung 8 verbunden, durch die Hochdruckgas 21 über einen Anodeneingang 10 in die Anode 3 der Brennstoffzelle 2 geleitet wird. In der Druckgaskammer und der Verdichterkammer ist durch Gasflüsse bzw. durch in der Druckgaskammer vorliegende Druckdifferenzen eine Bewegung eines hier nicht dargestellten Kolbens 12 stattfindend, die gleichzeitig eine Verdichtung bzw. Förderung des Arbeitsmediums 19 in der Verdichterkammer bewirkend ist. Am Ausgang 26 der ersten Verdichtermittel 7 tritt das Hochdruckgas 21 mit einem Druck p2 aus. Innerhalb der Anodenleitung 8 ist ein Druckminderer 13 angeordnet, der den Druck p2 des Hochdruckgases 21 auf den Einspeisedruck p3 des Hochdruckgases 21 in die Brennstoffzelle 2 reduzierend ist. Die Umgebungsluft 20 tritt aus der Verdichterkammer der ersten Verdichtermittel 7 mit einem Druck p5 aus, der im Betriebszustand des Brennstoffzellensystems 1 deutlich oberhalb des Drucks p4 liegt, mit der die Umgebungsluft 20 in das Brennstoffzellensystem 1 bzw. in die ersten Verdichtermittel 7 eingeleitet wurde. Durch die Kathodenleitung 9 wird die im Betriebszustand verdichtete Umgebungsluft 20 über einen Kathodeneingang 11 in die Kathode 4 der Brennstoffzelle 2 geleitet. Innerhalb der Kathodenleitung 9 ist ein Drucktank 15 angeordnet, in dem die verdichtete Umgebungsluft 20 zwischenspeicherbar ist. In Richtung des Kathodeneingangs 11 hinter dem Gastank 15 angeordnet, ist ein Sperrmittel 14 in Form eines Ventils, über das die Zufuhr von Umgebungsluft 20 aus dem Gastank 15 in die Brennstoffzelle 2 einstellbar bzw. blockierbar ist. Insbesondere wird ein Betrieb der Brennstoffzelle 2 über das Öffnen dieses Ventils gestartet, wodurch die Brennstoffzelle 2 mit benötigter, verdichteter Umgebungsluft 20 versorgt wird. Insbesondere ist die Versorgung der Brennstoffzelle 2 mit verdichteter Umgebungsluft 20 über das Ventil vereinfacht schnell steigerbar. Wird die Brennstoffzelle 2 über das Öffnen des genannten Ventils gestartet, ist sie Hochdruckgas 21, insbesondere Wasserstoff, verbrauchend, wodurch eine Druckdifferenz innerhalb beider Teile der durch ein hochdruckseitiges Ende des in der Durckgaskammer und in der Verdichterkammer beweglich geführten Kolbens 12 getrennten Druckgaskammer entsteht. In der dargestellten Ausführungsform wird durch die Druckdifferenz der Kolben 12 in der Druckgaskammer und in der Verdichterkammer bewegt. Durch die Bewegung des Kolbens 12 in der Verdichterkammer wird darin vorhandene Umgebungsluft 20 gefördert und verdichtet. Damit wird kinetische Energie des mit Druck p1 eingespeisten Hochdruckgases 21 in kinetische Energie der Umgebungsluft 20 umgewandelt. Eine Reduzierung p1 - p2 des Drucks p1 des Hochdruckgases 21 wird damit in eine Erhöhung p5 - p4 des Drucks p4 der zugeführten Umgebungsluft 20 umgewandelt. Das erfindungsgemäße Brennstoffzellensystem 1 ermöglicht damit eine kontinuierliche Förderung des Arbeitsmediums 19 auch bei hohem Druck des Hochdruckgases 21. Dadurch ist insbesondere verdichtete Umgebungsluft 20 für die Brennstoffzelle 2 bereitstellbar, ohne dass eine zusätzliche, externe Energiezufuhr notwendig wäre. In der dargestellten Ausführungsform ist die Kathodenleitung 9 über ein Rückschlagventil 22 mit zweiten Verdichtermitteln 16 leitend verbunden. In diese zweiten Verdichtermittel 16 wird über weitere Einleitungsmittel 17 nicht aus den Verdichtermitteln 7 stammende Umgebungsluft 20 eingeleitet und dort auf den nötigen Einspeisedruck p6 der Umgebungsluft 20 am Kathodeneingang 11 verdichtet. Ein Betrieb der zweiten Verdichtermittel 16 bedarf elektrischer Energie. Insbesondere beim Starten der Brennstoffzelle 1 kann diese nicht über die Brennstoffzelle 2 selbst bereitgestellt werden. Bei geschlossenem Rückschlagventil 22 ist das erfindungsgemäße Brennstoffzellensystem 1 jedoch ohne äußere Energiezufuhr lediglich mit Hilfe der Verdichtermittel 7 startbar. Im Betriebszustand der Brennstoffzelle 2 können die zweiten Verdichtermittel 16 mit elektrischer Energie aus der Brennstoffzelle 2 versorgt werden, wodurch eine alleinige oder durch die Verdichtermittel 7 unterstütze Versorgung der Brennstoffzelle 2 mit verdichteter Umgebungsluft 20 ermöglicht ist. Bei Ausfall der zweiten Verdichtermittel 16 ist die Brennstoffzelle 2 erfindungsgemäß auch lediglich mit Hilfe der Verdichtermittel 7 versorgbar. Über Kathoden- und Anodenausgang 27, 28 wird Kathoden- und Anodenabgas 23, 24 aus dem System abgegeben. Damit ermöglicht die dargestellte Ausführungsform insgesamt einen stabilen Betrieb der Brennstoffzelle 2 in beliebigen Betriebszuständen.

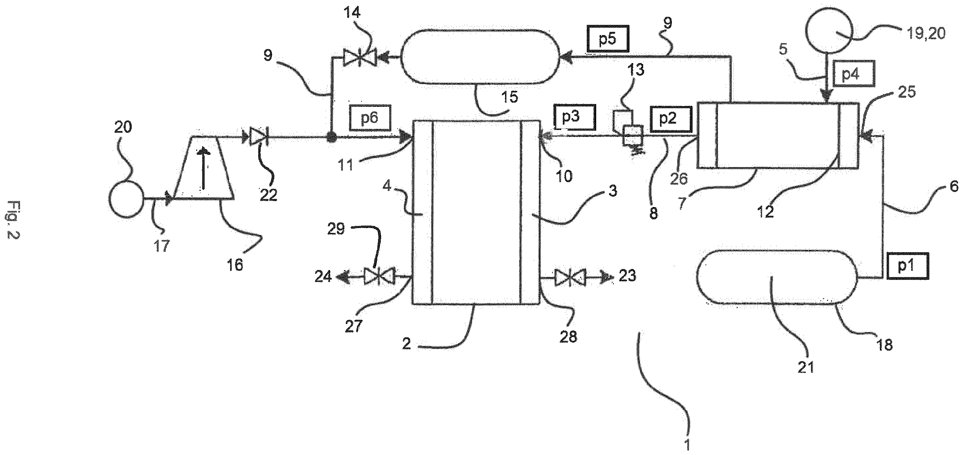

Fig. 2 zeigt eine weitere Ausführungsform des erfindungsgemäßen Brennstoffzellensystems 1. Die Ausführungsform entspricht der in der Fig. 1 gezeigten in Aufbau und Funktion, bis auf die Anordnung eines Vordruckreglers 29 am Kathodenausgang 27, wobei über den Vordruckregler 29 das Kathodenabgas 24 reguliert abgebbar ist. Allgemein ist der Kathodenbetriebsdruck über den Vordruckregler 29 regulierbar. Eine Erhöhung des Betriebsdrucks der Brennstoffzelle 2 ist die Effizienz der Brennstoffzelle 2 steigernd. Eine solche Erhöhung ist mit Hilfe der gezeigten Ausführungsform über die Erhöhung des Kathodenbetriebsdrucks sowie Erhöhung des Drucks an einem Ausgang der zweiten Verdichtermittel 16 ermöglicht. Die für den erhöhten Druck am Ausgang der zweiten Verdichtermittel 16 notwendige Reduktion eines Volumenflusses durch die zweiten Verdichtermittel 16 ist dabei über die erfindungsgemäße zusätzliche Zufuhr von mit Hilfe der ersten Verdichtermittel 7 verdichteter Umgebungsluft 20 ermöglicht.

### BEZUGSZEICHENLISTE

- 1.: Brennstoffzellensystem
- 2.: Brennstoffzelle
- 3.: Anode
- 4.: Kathode
- 5.: Erste Einleitungsmittel
- 6.: Zweite Einleitungsmittel
- 7.: Verdichtermittel
- 8.: Anodenleitung
- 9.: Kathodenleitung
- 10.: Anodeneingang
- 11.: Kathodeneingang
- 12.: Kolben
- 13.: Druckminderer
- 14.: Sperrmittel
- 15.: Drucktank
- 16.: weitere Verdichtermittel
- 17.: weitere Einleitungsmittel
- 18.: Gastank
- 19.: Arbeitsmedium
- 20.: Umgebungsluft
- 21.: Hochdruckgas
- 22.: Rückschlagventil
- 23.: Anodenabgas
- 24.: Kathodenabgas
- 25.: Eingang
- 26.: Ausgang
- 27.: Kathodenausgang
- 28.: Anodenausgang
- 29.: Vordruckregler

## Patentansprüche

1. Brennstoffzellensystem (1) aufweisend eine Brennstoffzelle (2) mit einer Anode (3) und einer Kathode (4), Verdichtermittel (7) zum Verdichten eines Arbeitsmediums (19), wobei die Verdichtermittel (7) zur Umformung kinetischer Energie eines Hochdruckgases (21) in eine Verdichtung des Arbeitsmediums (19) ausgestaltet sind, **dadurch gekennzeichnet, dass** die Verdichtermittel (7) eine Druckgaskammer zur Versorgung der Brennstoffzelle (1) mit Hochdruckgas (21) und eine Verdichterkammer zum Verdichten des Arbeitsmediums (19) und einen in der Druckgaskammer und der Verdichterkammer geführten Kolben (12) aufweisen, wobei ein hochdruckseitiges Ende des Kolbens (12) in der Druckgaskammer und ein verdichterseitiges Ende des Kolbens (12) in der Verdichterkammer geführt ist.

2. Brennstoffzellensystem (1) gemäß Anspruch 1, **dadurch gekennzeichnet, dass** das Arbeitsmedium (19) ein Kathodengas, insbesondere Umgebungsluft (20), ist und/oder dass das Hochdruckgas (21) Anodengas, insbesondere Wasserstoff, ist.

3. Brennstoffzellensystem (1) gemäß Anspruch 2, **dadurch gekennzeichnet, dass** die Druckgaskammer an eine Anodenleitung (8), in der das Hochdruckgas (21) in die Anode (3) geführt ist, angeschlossen ist und die Verdichterkammer an eine Kathodenleitung (9), in der die verdichtete Umgebungsluft (20) in die Kathode (4) geführt ist, angeschlossen ist.

4. Brennstoffzellensystem (1) gemäß Anspruch 1, 2 oder 3, **dadurch gekennzeichnet, dass** die Verdichtermittel (7) als eine Boosterpumpe ausgestaltet sind.

5. Brennstoffzellensystem (1) gemäß Anspruch einem der vorherigen Ansprüche **dadurch gekennzeichnet, dass** ein Radius eines verdichterseitigen Endes des Kolbens (12) kleiner ist als ein weiterer Radius des hochdruckseitigen Endes des Kolbens (12) ist.

6. Brennstoffzellensystem (1) gemäß Anspruch 3, 4 oder 5, **dadurch gekennzeichnet, dass** die Anodenleitung (8) einen Druckminderer (13) aufweist.

7. Brennstoffzellensystem (1) gemäß einem der Ansprüche 3 - 6, **dadurch gekennzeichnet, dass** die Kathodenleitung (9) Sperrmittel (14) zum Blockieren eines Gasflusses der Umgebungsluft (20) in der Kathodenleitung (9) aufweist.

8. Brennstoffzellensystem (1) gemäß einem der Ansprüche 3-7, **dadurch gekennzeichnet, dass** die Kathodenleitung (9) einen Drucktank (15) zur Zwischenspeicherung der in den Verdichtermitteln (7) verdichteten Umgebungsluft (20) aufweist.

9. Brennstoffzellensystem (1) gemäß Anspruch 1, **dadurch gekennzeichnet, dass** das Arbeitsmedium (19) ein Kühlmittel und/oder Wasser ist.

10. Brennstoffzellensystem (1) gemäß einem der vorangegangenen Ansprüche, **dadurch gekennzeichnet, dass** es mindestens ein weiteres Verdichtermittel (16) zum Verdichten von nicht aus der Verdichterkammer stammender Umgebungsluft (20) zur Versorgung der Kathode (4) aufweist, wobei das weitere Verdichtermittel (16) über die Brennstoffzelle (2) mit elektrischer Energie versorgbar ist und wobei zwischen weiterem Verdichtermittel (16) und Kathode (4) ein Rückschlagventil (22) angeordnet ist.

11. Brennstoffzellensystem (1) gemäß einem der vorangegangenen Ansprüche, **dadurch gekennzeichnet, dass** es einen Gastank (15) zur Lagerung des Hochdruckgases (21) aufweist.
